# EUROPEAN PATENT APPLICATION

(11) **EP 2 009 819 A1**
(43) Date of publication of application: **31.12.2008**
(21) Application number: 07012519.0
(22) Date of filing: 26.06.2007
(51) Int. Cl.: H04J 3/06, H04L 7/00, G06F 1/18, G06F 13/40

(54) **Advanced Mezzanine Card-module**

(71) Applicant: Nokia Siemens Networks Oy, 02610 Espoo (FI)
(72) Inventor: Schwab Dieter, 86916 Kaufering (DE)
(74) Representative: Bruglachner, Thomas E.

(57) **Abstract**

An Advanced Mezzanine Card (AMC)-module (10) for connection either to an Advanced Telecommunication Computing Architecture (ATCA)-carrier board (60) or to a Micro Telecommunication Computing Architecture (MicroTCA) (40) is described. The AMC-module (10) comprises a local clock generator (11) with a first input (20) for receiving a first clock signal, a second input (21) for receiving a second clock signal, and at least one output (22, 23, 24, 25) for outputting a reference clock signal to a centralized clock function (16) within the architecture. The clock generator (11) further comprises:
- a demodulation means (13) for demodulating the first and the second clock signal and outputting a first and a second output signal derived from the first clock signal as well as a third and a forth output signal derived from the second clock signal, wherein the third output signal corresponds to the first output signal and the forth output signal corresponds to the second output signal,
- a clock selection means (14, 15) coupled to the demodulation means (13) and receiving the first, the second, the third and the forth output signals, wherein the clock selection means (14, 15) is to
- either select the first or the third signal in dependency of availability of the first or the third signal for outputting it to the at least one output as reference for the clock generator, and
- either select the second or the forth signal in dependency of availability of the second or the forth signal for outputting it to the at least one output as reference for the clock generator.

## Description

The invention relates to an Advanced Mezzanine Card module for connecting either to an Advanced Telecommunication Computing Architecture carrier board or to a Micro Telecommunication Computing Architecture, wherein the Advanced Mezzanine Card module comprises a local clock generator with a first input for receiving a first clock signal, a second input for receiving a second clock signal and at least one output for outputting a reference clock signal to a centralized clock function within the architecture.

In general, telecommunication network elements regularly have to provide a system reliability of more than 99.999%. Therefore, network elements will be set up in a redundant way to ensure that no single point of failure occurs. Telecommunication equipment manufacturer tend to move towards standardized system components for the hardware. Consequently, there is need within the current standards to ensure that redundancy will be available in system concepts.

An Advanced Mezzanine Card module or AMC-module is a printed circuit board that follows a specification of the PCI Industrial Computers Manufacturers Group (PICMG), with more than 100 companies participating. Also known as AdvancedMC, the target is to meet the requirements for the next generation of "carrier grade" communications equipment. There is a series of specifications which is designed to work on any carrier board or carrier card, primary the Advanced Telecommunication Computing Architecture (ATCA or AdvancedTCA), but also to plug into a backplane directly as defined by Micro Telecommunication Computing Architecture (MicroTCA) specification.

ATCA is the largest specification effort in the history of the PCI Industrial Computer Manufacturers Group. ATCA is targeted to requirements for the next generation of "carrier grade" communications equipment. A series of specifications incorporates the latest trends in high speed interconnect technologies, next generation processors, and improved reliability, availability and serviceability (RAS). ATCA comprises a carrier board of a given form factor. On this carrier board up to four AMC-modules can be provided.

Regarding AMC-modules, besides using these modules in ATCA-environments, one possible equipment practice or adequate standard that enables telecommunication equipment manufacturers to set up network element with commercial, standardized components is the Micro Telecommunication Computing Architecture (MicroTCA or µTCA), which is standardized by PICMG.

MicroTCA is a defined equipment practice which makes use of the AMC-modules which are also used in an ATCA-environment as sub-modules on the carrier boards. As ATCA has been a settled standard for a longer time, the pin out of AMC-modules has been fixed in a current standard which provides only up to four ports with regard to telecommunication clocks. Within the current AMC-standardization the usage of the telecommunication clocks is recommended to be for a non clock generator as follows:

| | |
|---|---|
| TCLKA (In): | 19.44 MHz system clock |
| TCLKB (Out): | reference clock |
| TCLKC (In): | 8 kHz system clock |
| TCLKD (Out): | currently not defined. |

As MicroTCA will be used also for the setup of high available network elements for telecommunication systems, there is a need to support those 19.44 MHz and 8 kHz system and a line timing reference clock in a redundant fashion to ensure a system availability of the whole network element to be more than 99.999%.

Considering the need for redundant clock support will therefore result in the need of additional clock signals on an AMC-module. As a result, AMC-modules of such a manner would not be backwards compatible with current market solutions or may result in not usability of AMC-modules designed for MicroTCA within an ATCA-environment.

Currently, all available ports and signals on an AMC-module are defined for a certain usage within an ATCA-environment. Changing the number of clock ports will therefore result in usage of defined lines or ports which are in use by existing ATCA-solutions. Changing the using the signals for providing additional clock signals will therefore result in incompatible solutions between AMC-modules used in MicroTCA and AMC-modules used in ATCA-environments.

As a result specific AMC-modules for a specific purpose (ATCA or MicroTCA) have to be provided.

It is therefore an object of the present invention to provide an Advanced Mezzanine Card (AMC) module which can be used either in an Advanced Telecommunication Computing Architecture or in Micro Telecommunication Computing Architecture.

It is a further object of the present invention, to provide an AMC-module according to present AMC-standards which can be used in a MicroTCA-environment and thereby providing redundancy of clock signals to a local clock generator on the AMC-module.

It is a further object of the present invention to provide a Micro Telecommunication Computing Architecture system for receiving an AMC-module which provides redundancy of the clock signals to a local clock generator on the AMC-module. These objects will be solved by the independent claims. Preferred embodiments of the invention are set out in the respective dependent claims.

An AMC-module according to the invention for connection either to an ATCA-carrier board or to a MicroTCA, comprises a clock generator with a first input for receiving a first clock signal, a second input for receiving a second clock signal and at least one output for outputting a reference clock signal to a centralized clock function within the architecture. The clock generator further comprises:
- a demodulation means for demodulating the first and the second clock signal and outputting a first and a second output signal derived from the first clock signal as well as a third and a fourth output signal derived from the second clock signal, wherein the third output signal corresponds to the first output signal and the fourth output signal corresponds to the second output signal;
- a clock selection means coupled to the demodulation means and receiving the first, the second, the third and the fourth output signals, wherein the clock selection means is to
   - either select the first and the third signal in dependency of availability of the first or the third signal for outputting it to the at least one output as reference for the clock generator, and
   - either select the second or the fourth signal in dependency of availability of the second or the forth signal for outputting it to the at least one output as reference for the clock generator.

A Micro Telecommunication Computing Architecture system for receiving an AMC-module according to the invention comprises at least one clock signal generating means for providing a first signal and a second signal being different from the first signal, and a modulating means assigned to the at least one clock signal generating means for modulating the first and the second signal and outputting a first and a second clock signal which will be fed to the first and second input of the local clock generator of the AMC-module.

According to a embodiment of the system the modulation means may be an amplitude modulator, a frequency modulator, a pulse-width modulator, a phase-shift modulator or is to add or overlay to first and the second signal.

The basic idea of the invention is to keep the number of clock lines and the basic clocking scheme as defined in existing AMC-standard and to transfer the needed clock signals to the AMC-module via these physical lines as modulated or overlaid signals. Therefore, within MicroTCA the AMC-module is capable to select between the redundant clocks in an independent way, thereby providing redundancy of the clock signal. Within ATCA, an AMC-module according to the invention can be used by standard compliant ATCA-carrier boards as the automatic selection logic will select the needed reference clocks as the redundant clocks will not be delivered by standard ATCA-carrier boards. Therefore, the AMC-modules according to the invention have the same behavior as currently used AMC-modules. The modulation of two within the AMC-module needed clocks allows a backward compatibility to existing AMC-modules.

The possibility of using AMC-modules in different telecommunication architectures (ATCA and MicroTCA) will give suppliers a better cost position due to better economy of scale for the AMC-modules. The invention provides a cost saving by reusing modules in different architectures (ATCA, MicroTCA, PicoTCA and other equipment standards which will make use of AMC-modules in the future). Manufacturers of AMC-modules have a better protection of their investment for delivered equipment. MicroTCA is expected to have much higher AMC-module volumes than ATCA. Therefore, supplier can participate from the economy of scale of the bigger MicroTCA-market and can obtain AMC-modules at lower costs.

Furthermore, there is a leverage synergy between ATCA, MicroTCA, PicoTCA and other technologies using AMC-modules. A further advantage is asset cost saving for storage in case of usage of both architectures and singular applications. A further advantage is that the invention guarantees that AMC-modules for MicroTCA remain compatible for ATCA-environments.

According to a further embodiment of the AMC-module the first and/or the second clock signal is a clock signal based on an amplitude modulation of a first signal corresponding the first/third output signal and a second signal corresponding to the second/fourth output signal and the demodulation means is to demodulate the amplitude modulated clock signal.

According to a further embodiment of the AMC-module the first and/or the second clock signal is a clock signal based on a frequency modulation of a first signal corresponding to the first/third output signal and a second signal corresponding to the second/fourth output signal and the demodulation means is to demodulate the frequency modulated clock signal.

According to a further embodiment of the AMC-module the first and/or the second clock signal is a clock signal based on a pulse-width modulation of a first signal corresponding to the first/third output signal and a second signal corresponding to the second/fourth output signal and the demodulation means is to demodulate the pulse-width modulated clock signal.

According to a further embodiment of the AMC-module the first and/or the second clock signal is a clock signal based on a phase-shift modulation of a first signal corresponding to the first/third output signal and a second signal corresponding to the second/fourth output signal and the demodulation means is to demodulate the phase-shift modulated clock signal.

According to a further embodiment of the AMC-module the first and/or the second clock signal is a clock signal based on adding or overlay of a first signal corresponding to the first/third output signal and a second signal corresponding to the second/fourth output signal and the demodulation means is to demodulate the added modulated clock signals and the overlaid modulated clock signal, respectively.

The first signal may be a clock signal with a frequency of 19.44 MHz. The second signal may be a clock signal with a frequency of 8 kHz.

According to a further embodiment the module comprises a first and a second clock output, each of them providing a reference clock signal.

Within a MicroTCA-environment, the AMC-module according to the invention is capable to select between the redundant clock signals in an independent way, so that the 19.44 MHz signal may be used from the first input and the 8 kHz system clock may be used from the redundant source, or vice versa. The AMC-module is further capable to use both clocks from the same signal source in this implementation. Within an ATCA-environment the AMC-module will select the first input as 19.44 MHz reference and the second input as 8 kHz reference as the redundant clocks will not be delivered by a standard ATCA-carrier board.

A more detailed explanation of the invention will be described with reference to the figures.
- Fig. 1: shows the clock architecture of an Advanced Mezzanine Card (AMC)-module as defined in a current standard,
- fig. 2: shows the clock architecture of the AMC-module shown in fig. 1 within an existing Advanced Telecommunication Computing Architecture (ATCA)-carrier,
- fig. 3: shows the redundant clock architecture within Micro Telecommunication Computing Architecture (MicroTCA) according to a possible solution,
- fig. 4: shows the impact of the AMC-module of fig. 3 on an ATCA-carrier board having a incompatible clocking,
- fig. 5: shows a redundant clock architecture within MicroTCA by using a clocking scheme according to the invention, and
- fig. 6: shows an AMC-module according to the invention on an existing ATCA-carrier board.

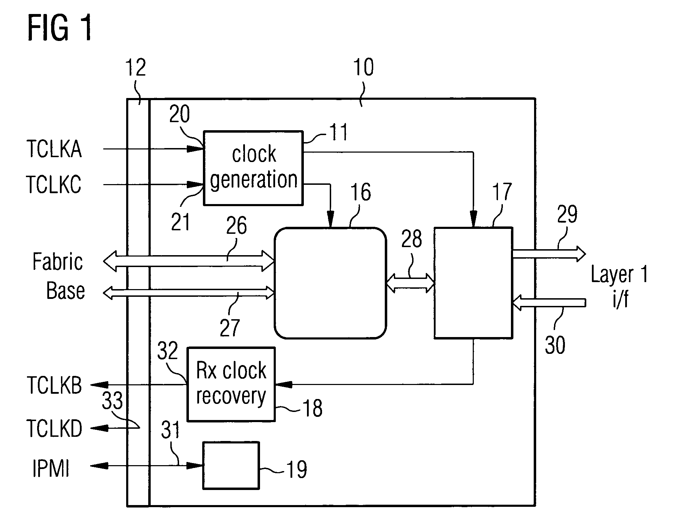

Fig. 1 shows a detail of the clock architecture of an AMC-module 10 as defined in current standardization. The AMC-module 10 comprises a clock generation means or local clock generator 11. The clock generator 11 comprises a first input 20 for receiving a first clock signal and a second input 21 for receiving a second clock signal. The first input 20 is connected to a port TCLKA of the AMC-module 10. The second input 21 is connected to a port TCLKC of the AMC-module 10. The ports TCLKA and TCKLC are clock ports and are provided at a connector 12 as well as further ports of the AMC-module 10. One or more outputs of the clock generator 11 are coupled to a payload function 16 of the AMC-module 10 and an input/output card front end function 17. An output of the input/output card front end function 17 is coupled with a clock recovery means or clock recovery 18. An output of the clock recovery 18 is a first clock output 32 coupled to a port TCLKB of the connector 12. A second clock output coupled to port TCLKD 33 will not be used according to the current standard.

As well known to the person skilled in the art the payload function 16 is connected with a couple of inputs/outputs 26, 27 wherein inputs/outputs 26 are connected to fabric ports and inputs/outputs 27 to ports regarding to basic communication. Furthermore, data exchange between the payload function and the input/output card front end function 17 is possible (cf. 28). The input/output card front end function 17 is further coupled to an amount of inputs and outputs for exchanging data with layer 1 i/f (cf. 29, 30). A module management controller 19 is coupled to a port IPMI for exchanging data with an intelligent platform management outside the AMC-module.

According to the current standardization the first clock signal at port TCLKA and the first input 20 is a 19.44 MHz system clock. The second clock signal at port TCLKC and the second input 21 of clock generator 11 is a 8 kHz system clock. At port TCLKB a reference clock is provided which is created by clock recovery 18. Port TCLKD is defined as an output port but not assigned for AMC-module 10.

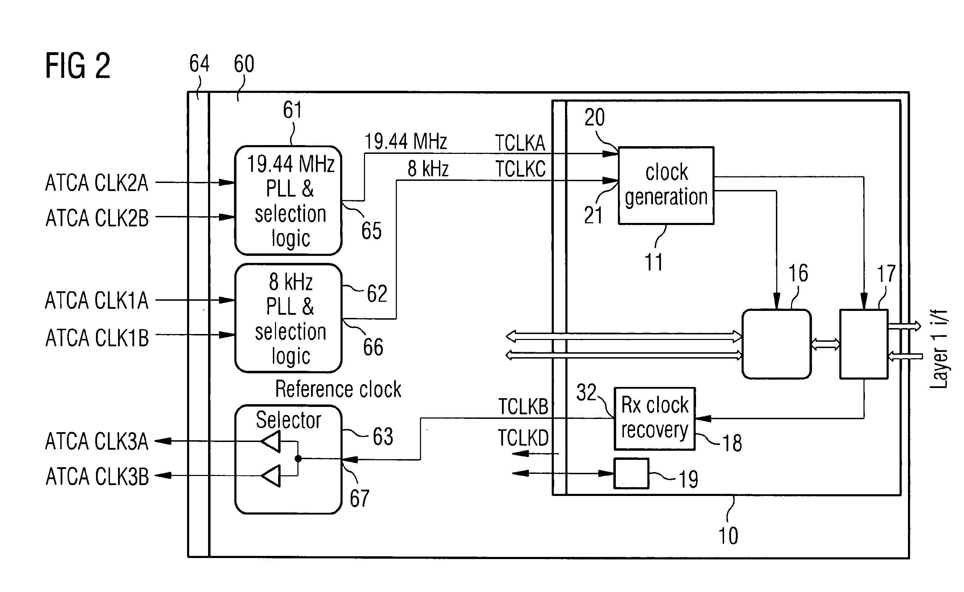

Fig. 2 shows the clock architecture of AMC-module 10 according to fig. 1 when connected to an ATCA-carrier board 60. The ATCA-carrier board 60 comprises a connector 64 with an amount of input and output ports. A PLL and selection logic 61 for the 19.44 MHz system clock is coupled to ports ATCA CLK2A and ATCA CLK2B. An output 65 for the 19.44 MHz system clock is connected to port TCLKA of AMC-module 10. A PLL and selection logic 62 of 8 kHz system clock is coupled to ports ATCA CLK1A and ATCA CLK1B. An output 66 is connected to port TCLKC of AMC-module 10, thereby providing the 8 kHz system clock as second clock signal for the AMC-module 10. Port TCLKB connected to clock recovery 18 of AMC-module 10 is connected to an input 67 of a selector 63. Selector 63 is coupled to ports ATCA CLK3A and ATCA CLK3B of ATCA-carrier board 60. Redundancy of system clocks is provided by the ATCA-carrier board 60 by connecting each TLL and selection logic 61 and 62 with two ports each receiving redundant clock signals.

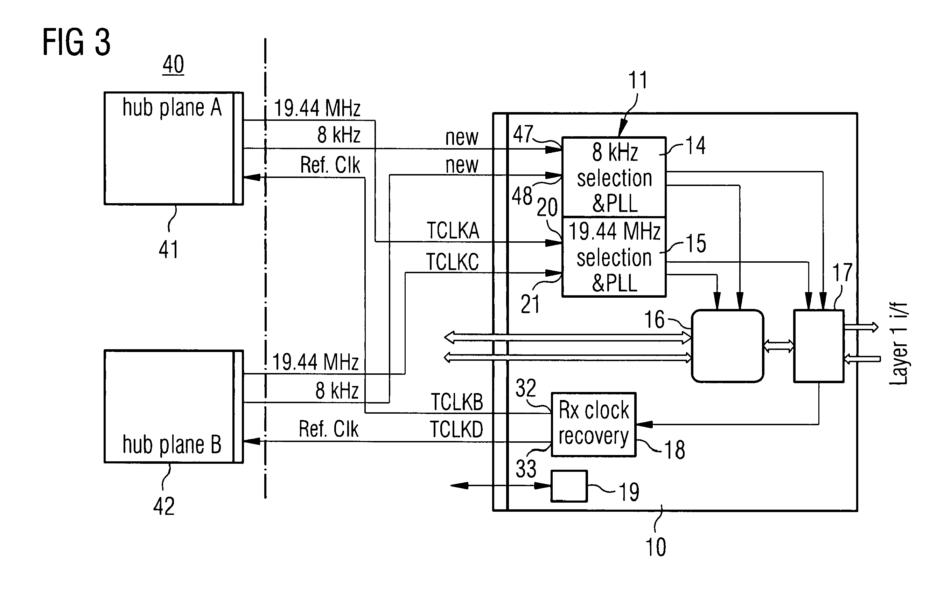

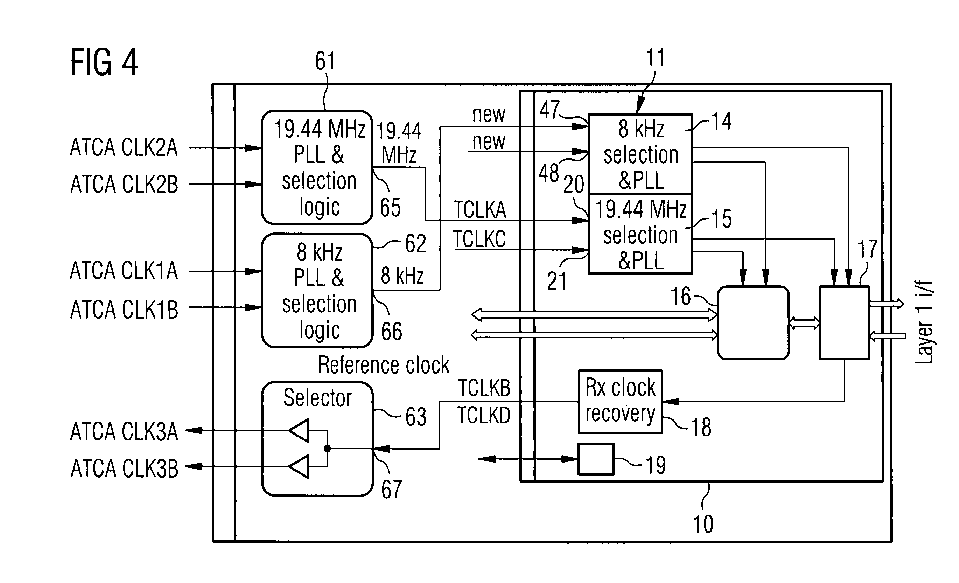

As will be apparent from fig. 3 and 4 it is not possible to use an AMC-module 10 according to fig. 1 in a MicroTCA-environment where a redundancy of the clock signals has to be provided. Fig. 3 shows a possible solution for a redundant clock architecture of AMC-module 10 according to fig. 1 within a MicroTCA. On the left side of fig. 3 depicted with reference numeral 40 elements of MicroTCA are shown. With reference numeral 41 a hub plane A is depicted, with reference numeral 42 a hub plane B is depicted. Each of the hub planes 41 and 42 comprises two outputs for providing 19.44 MHz and 8 kHz system clocks. The 19.44 MHz system clock of hub plane 41 is connected with port TCLKA of AMC-module 10. Port TCLKC of AMC-module 10 is connected with the 19.44 MHz system clock of hub plane 42. TCLKA and TCLKC are connected to a clock selection means 15 either selecting the 19.44 MHz signal of hub plane 41 or 42 independently of availability of the respective system clock. A clock selection means 14 of clock generator 11 for the 8 kHz system clock is connected to two ports which are depicted with "new" in fig. 3. The first of the "new" ports is connected to the output of hub plane 41, the second port depicted with "new" is connected to the output of the 8 kHz system clock of hub plane 42. Port TCLKB which provides a reference clock is connected to an input of hub plane 41 whereas port TCLKD which provides a reference clock, too, is connected to an input of hub plane 42. As a result, TCLKA which is currently assigned to redundancy hub plane 41 and TCLKC which is currently assigned to redundancy hub plane 42 would have the same 19.44 MHz system clock as TCLKA. TCLKB and TCKLD are assigned as reference clock. Furthermore, two new clock ports are required for the 8 kHz system clock which would result in a proprietary AMC-module 10 since all available ports of AMC-module 10 are currently assigned for usage.

Assuming that an AMC-module 10 as depicted in fig. 4 would be connected to an ATCA-carrier board 60, this would result in that that output 66 of PLL and selection logic 62 providing the 8 kHz system clock would have been connected to one of the new ports to have a connection to the clock selection means 14 of the 8 kHz system clock. Furthermore, port TCKLC which is connected to clock selection means 15 for the 19.44 MHz system clock would not be needed for usage. As is easily apparent to one skilled in the art a modified AMC-module 10 as shown in fig. 3 would result in different connection when using it in connection with an ATCA-carrier board.

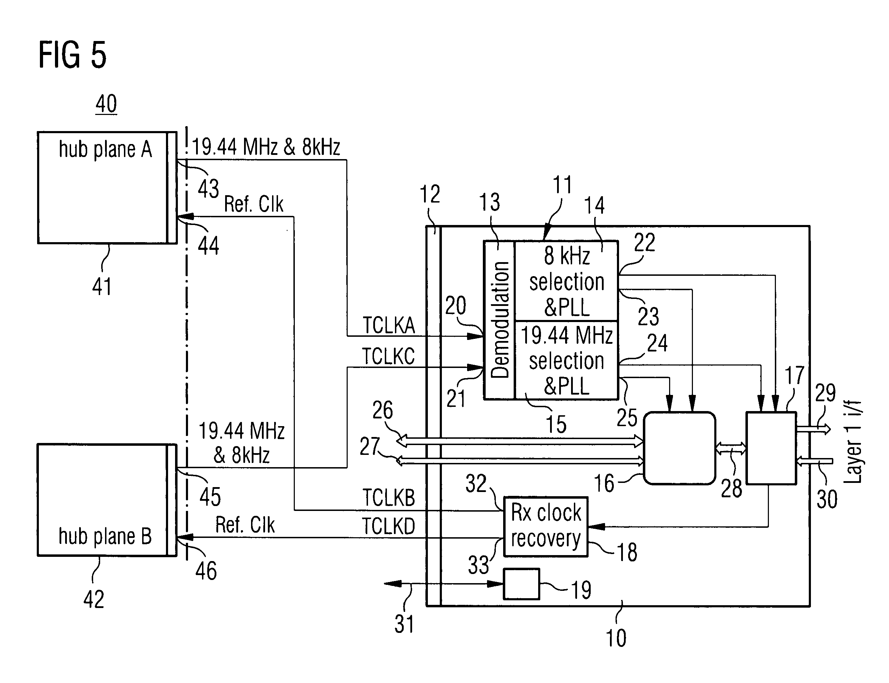

The invention therefore provides a different clock generator 11 as depicted in fig. 5 on the AMC-module 10 to be able to use the AMC-module 10 either for connection with an ATCA-carrier board (thereby keeping the known connections between the elements of the ATCA-carrier board and the ports of AMC-module 10) and a MicroTCA, thereby providing clock redundancy.

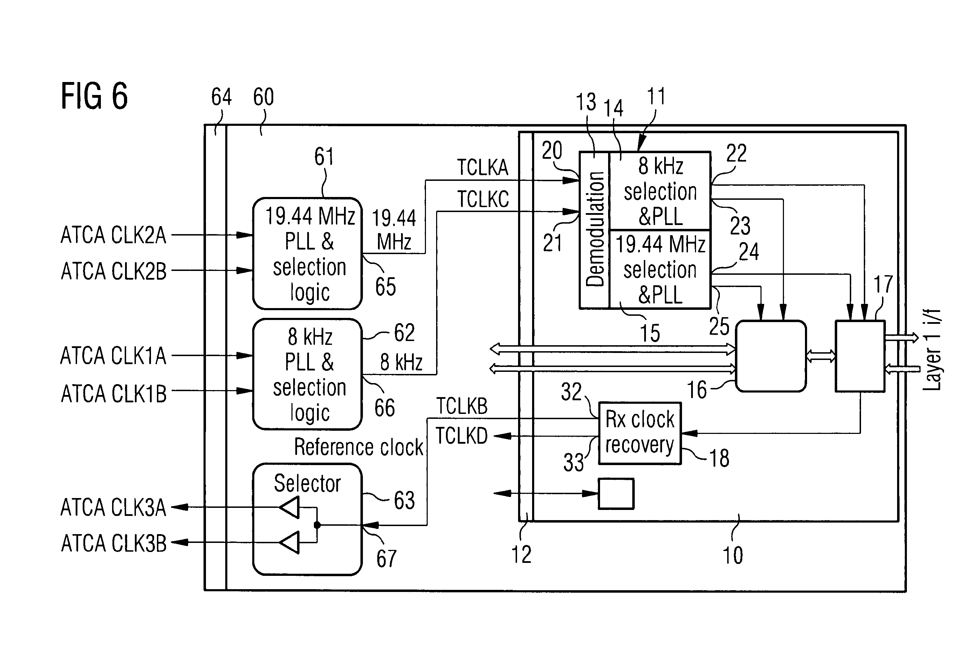

The clock generator 11 of an AMC-module 10 according to the invention comprises a demodulation means 13 coupled with ports TCLKA and TCLKC. Outputs (in the present example: four) of the demodulation means 13 (not shown in fig. 5 and 6) are connected to clock selection means 14 responsible for the 8 kHz system clock and clock selection means 15 responsible for 19.44 MHz system clock. Outputs 22, 23 of clock selection means 14 and outputs 24, 25 of clock selection means 15 are connected to the payload function 16 and the input/output card front end function 17, respectively.

The demodulation means 13 receives a first clock signal at the first input 20, connected to TCLKA. TCLKA is connected to output 43 of hub plane 41 of a MicroTCA. The first clock signal is a modulated signal from the 19.44 MHz and the 8 kHz system clocks. The modulation can be based on an amplitude modulation, a frequency modulation, a pulse-width modulation, a phase-shift modulation or the two system clocks can be overlaid or added. In an appropriate manner the demodulation means 13 receives at second input 21 a second clock signal which is modulated from the 19.44 MHz and 8 kHz system clocks. The second input 21 is connected to port TCKLC which is connected to output 45 of hub plane 42 of MicroTCA 40.

As will be understood MicroTCA has to be equipped with a modulating means (e.g. a frequency modulator, an amplitude modulator, pulse-width modulator, phase-shift modulator, an adding or overlaying means) to be able to provide the modulated signal at outputs 43 and 45 of hub planes 41 and 42 wherein the output signals contain the 19.44 MHz system clock and the 8 kHz system clock.

After having demodulated the first and the second clock signals two 8 kHz clock signals are provided for clock selection means 14 and two 19.44 MHz system clocks are provided for clock selection means 15. Independently of the availability of the 19.44 MHz system clock from hub plane 41 or hub plane 42 a clock selection means 15 makes a connection to hub plane 41 or hub plane 42. In an appropriate manner clock selection means 14 provides a connection to hub plane 41 or hub plane 42 for providing a 8 kHz system clock to clock generator 11. Thereby, a redundancy can be provided by the clock generator 11.

TCLKB providing a reference clock signal is connected to input 44 of hub plane 41. In an appropriate manner port TCLKD is connected to input 46 of hub plane 42, wherein TCLKD provides a reference clock, too.

When comparing the clock related ports of AMC-module 10 according to the invention with the AMC-module of fig. 1 it can be seen that these are equal to each other. Therefore, the AMC-module 10 as described in connection with fig. 5 can be used without any technical changes in conjunction with an ATCA-carrier board. This situation is shown in fig. 6.

As has already been described, TCLKA receives the 19.44 MHz system clock from TLL and selection logic 61. TCLKC receives the 8 kHz system clock from TLL and selection logic 66. When the first clock signal at the first input 20 (19.44 MHz system clock) will be demodulated the clock selection means 15 will receive the first input signal whereas the clock selection means 14 will not receive a signal corresponding to the 8 kHz system clock. In an appropriate manner, when demodulating the second clock signal at the second input 21 a signal corresponding to 8 kHz system clock can be provided to clock selection means 14 but no clock signal can be provided for clock selection means 15 assigned to a 19.44 MHz system clock. Therefore, clock selection means 14 will provide a connection to TCLKC and clock selection means 15 will provide a connection to TCLKA. Redundancy of the system clocks will be provided by the PLL and selection logics 61 and 62 which are connected to redundancy plane A and plane B clock generator according to a current ATCA-standard.

By providing a demodulation means and a clock selection means in a clock generator 11 of an AMC-module it is possible to use the module either in a MicroTCA-environment or an ATCA-environment. In both cases redundancy of clock signals can be provided. When using AMC-module 10 with MicroTCA, clock redundancy is provided by the clock generator 11 itself. When using the AMC-module in connection with ATCA clock redundancy will be provided by the ATCA-components.

### List of Reference Numerals

- 10: Advanced Mezzanine Card module (AMC-module)
- 11: clock generator
- 12: connector
- 13: demodulation means
- 14: clock selection means
- 15: clock selection means
- 16: payload function
- 17: input/output front end function
- 18: clock recovery
- 19: module management controller
- 20: first input (TCLKA) of clock generator
- 21: second input (TCLKC) of clock generator
- 22: output of clock generator
- 23: output of clock generator
- 24: output of clock generator
- 25: output of clock generator
- 26: inputs/outputs
- 27: inputs/outputs
- 28: data exchange
- 29: data exchange with layer 1
- 30: data exchange with layer 1
- 31: input/output of module management controller for data exchange with Intelligent Platform Management Interface (IPMI)
- 32: first clock output (TCLKB)
- 33: second clock output (TCLKD)
- 40: Micro Telecommunication Compute Architecture (MicroTCA)
- 41: hub plane A
- 42: hub plane B
- 43: output hub plane A
- 44: input hub plane A
- 45: output hub plane B
- 46: input hub plane B
- 47: additional input
- 48: additional input
- 60: Advanced Telecommunication Compute Architecture (ATCA) carrier board
- 61: PLL and selection logic of first signal
- 62: PLL and selection logic of second signal
- 63: selector
- 64: connector
- 65: output for first signal connected to first input (TCLKA) of clock generator
- 66: output for second singal connected to second input (TCLKC) of clock generator
- 67: input for reference clock signal connected to first clock output (TCLKB)

## Claims

1. An Advanced Mezzanine Card (AMC)-module (10) for connection either to an Advanced Telecommunication Computing Architecture (ATCA)-carrier board (60) or to a Micro Telecommunication Computing Architecture (MicroTCA) (40), the AMC-module (10) having a local clock generator (11) with a first input (20) for receiving a first clock signal, a second input (21) for receiving a second clock signal, and at least one output (22, 23, 24, 25) for outputting a reference clock signal to a centralized clock function (16) within the architecture, the clock generator (11) further comprising:
- a demodulation means (13) for demodulating the first and the second clock signal and outputting a first and a second output signal derived from the first clock signal as well as a third and a forth output signal derived from the second clock signal, wherein the third output signal corresponds to the first output signal and the forth output signal corresponds to the second output signal,
- a clock selection means (14, 15) coupled to the demodulation means (13) and receiving the first, the second, the third and the forth output signals, wherein the clock selection means (14, 15) is to
- either select the first or the third signal in dependency of availability of the first or the third signal for outputting it to the at least one output as reference for the clock generator, and
- either select the second or the forth signal in dependency of availability of the second or the forth signal for outputting it to the at least one output as reference for the clock generator.

2. The module according to claim 1, wherein the first and/or the second clock signal is a clock signal based on an amplitude modulation of a first signal corresponding to the first/third output signal and a second signal corresponding to the second/forth output signal and the demodulation means is to demodulate the amplitude modulated clock signal.

3. The module according to claim 1, wherein the first and/or the second clock signal is a clock signal based on a frequency modulation of a first signal corresponding to the first/third output signal and a second signal corresponding to the second/forth output signal and the demodulation means is to demodulate the frequency modulated clock signal.

4. The module according to claim 1, wherein the first and/or the second clock signal is a clock signal based on a pulse-width modulation of a first signal corresponding to the first/third output signal and a second signal corresponding to the second/forth output signal and the demodulation means is to demodulate the pulse-width modulated clock signal.

5. The module according to claim 1, wherein the first and/or the second clock signal is a clock signal based on a phase-shift modulation of a first signal corresponding to the first/third output signal and a second signal corresponding to the second/forth output signal and the demodulation means is to demodulate the phase-shift modulated clock signal.

6. The module according to claim 1, wherein the first and/or the second clock signal is a clock signal based on an adding or overlay of a first signal corresponding to the first/third output signal and a second signal corresponding to the second/forth output signal and the demodulation means is to demodulate the added modulated clock signals and the overlaid modulated clock signals, respectively.

7. The module according to one of the claims 2 to 6, wherein the first signal is a clock signal with a frequency of 19.44 MHz.

8. The module according to one of the claims 2 to 7, wherein the second signal is a clock signal with a frequency of 8 kHz.

9. The module according to one of the preceding claims, wherein the module comprises a first and a second clock output each of them providing a reference clock signal.

10. A Micro Telecommunication Computing Architecture (MicroTCA)-system (40) for receiving an AMC-module (10) according to one of the preceding claims, comprising
- at least one clock signal generating means for providing a first signal and a second signal being different from the first signal,
- a modulating means assigned to the at least one clock signal generating means for modulating the first and the second signal and outputting a first and a second clock signal which will be fed to the first and second input of the clock generator of the AMC-module.

11. The system according to claim 10, wherein the modulation means is a amplitude modulator.

12. The system according to claim 10, wherein the modulation means is a frequency modulator.

13. The system according to claim 10, wherein the modulation means is a pulse-width modulator.

14. The system according to claim 10, wherein the modulation means is a phase-shift modulator.

15. The system according to claim 10, wherein the modulation means is to add or overlay the first and the second signal.
